Europäisches Patentamt

European Patent Office

Office européen des brevets

(19)

(11) Publication number: **0 280 477**
**A1**

## EUROPEAN PATENT APPLICATION

(12)

(21) Application number: **88301419.3**

(22) Date of filing: **19.02.88**

(51) Int. Cl.⁴: **A 21 C 1/06**

(30) Priority: **21.02.87 GB 8704079**

(43) Date of publication of application:
**31.08.88 Bulletin 88/35**

(84) Designated Contracting States:
**AT BE CH DE ES FR GB GR IT LI LU NL SE**

(71) Applicant: **TWEEDY OF BURNLEY LIMITED**
**Peel Mill, Gannow Lane**
**Burnley Lancashire (GB)**

(72) Inventor: **Yell, Mark Donovan**
**27 West Bank Drive South Anston**
**Sheffield S31 7HT South Yorkshire (GB)**

(74) Representative: **Sherrard-Smith, Hugh et al**
**Appleyard, Lees & Co. 15 Clare Road**
**Halifax, HX1 2HY West Yorkshire (GB)**

(54) **Mixing and kneading of farinaceous material.**

(57) A scraper (12) rotates within a spherical container (10) to pass over nearly the complete inwardly facing surface of that container. A rotor (14) rotates in an opposite direction to the scraper (12) during the mixing and kneading of the farinaceous material. During discharge of the mixed material through the outlet (19) the rotor rotates in a reverse direction to that in which it rotates during mixing, to push the material out, and the scraper remains alternately next to the outlet (19) to deflect material out, or periodically rotates in a clockwise direction to dislodge any material from the sides of the container.

Fig 2.

EP 0 280 477 A1

## Description

### MIXING AND KNEADING OF FARINACEOUS MATERIAL.

The present invention relates to mixing and kneading of farinaceous material and in particular, although not exclusively to dough mixing and kneading machines.

In a known dough mixing and kneading machine, the container for the dough comprises a short cylinder having flat end plates with the longitudinal axis and sides of the cylinder extending horizontally. A rotatable scraper passes over the inwardly facing curved surface and a rotating beater is located within the cylinder.

In use, the dough tends to become trapped in the container at the junction between the cylinder and the flat end plates, particularly at the lower regions of that junction where the dough tends to rest under gravity. Furthermore, that portion of the container which is not passed over by the scraper may have dough thereon which is not being mixed at the same rate as the remainder of the mixture.

The prior container includes an outlet opening spaced from the ends of the cylinder in the bottom of the cylinder. When it is desired to discharge the mixed dough from the cylinder only that portion of the dough which falls towards the opening is able to be discharged, with the dough on either side of the opening taking considerable time to reach the opening and leave the container. This is not only a disadvantage in terms of the time taken to discharge a mix but is also a problem when cleaning the mixer as some of the cleansing water tends to remain in the lower portion of the cylinder on either side of the outlet opening.

According to one aspect of the present invention, a mixing and kneading machine for farinaceous material includes a container for the material to be mixed and a scraper arranged to pass over the majority of the inwardly facing surface of the container.

According to another aspect of the present invention, a mixing and kneading machine for farinaceous material includes a container for the farinaceous material having an outlet extending over the complete lowermost region of the container. With such a machine the farinaceous material and any subsequent cleansing water are able to be discharged quickly.

According to a further aspect of the present invention a mixing and kneading machine for farinaceous material includes a container for the material to be mixed in which a cross-section taken in any direction through the lower portion of the container will give a line on the interior of the container having a change in angle of less than 90° at any two adjacent locations on that line. With such a machine, there is less chance, if any, of farinaceous material tending to become trapped in sharp angled recesses during mixing or kneading, or of such material remaining on the container wall.

The line may have a change of angle of less than 90° at any two adjacent locations when taken from a cross-section of the majority of the container or over the complete container. The line may be curved along some or all of the cross-sections.

The container may include an outlet opening which extends over the complete lowermost region of the container. Such an outlet opening may allow rapid discharge of farinaceous material as well as rapid discharge of cleansing water. The scraper may be arranged to pass over the outlet opening, and the outlet opening may be arranged to extend to a greater distance from the lowermost region of the container in the direction of intended movement of the scraper during discharge of material from the container than it does in the opposite direction. Such an outlet opening may permit the machine to more rapidly discharge farinaceous material from the container as the rotatable member may assist in pushing the material towards and out of the opening.

The scraper may be arranged to pass over the lowermost portion of the inwardly facing surface of the container and over the complete extent of the inwardly facing surface of the container leading to the lowermost portion of that surface. The scraper may be arranged to pass over the inwardly facing surface of the container over a portion of the surface which faces downwardly. The rotatable member may include two blades which may be located diametrically opposite to each other with respect to the axis of rotation of the rotatable member. The rotatable member may extend in a direction transverse both to the rotational axis of the rotatable member and to the plane perpendicular to the rotational axis which may allow farinaceous material to be driven across the container upon rotation of the rotatable member.

A rotor may extend within the container, the scraper being arranged to pass over the inwardly facing surface of the container adjacent to the region where the rotor projects from the wall of the container. The scraper may be arranged to pass over the inwardly facing surface of the container around the region where the rotor projects from the wall of the container. The rotor may be arranged to rotate about an axis transverse to the vertical, which axis may be substantially horizontal.

The inwardly facing surface of the container, or the container itself may be substantially spherical. Such a shape has many advantages including the absence of any sharp corners on the interior where farinaceous material may tend to remain in during mixing and kneading. Furthermore, a pipe which is to be connected to the container, for instance for adding ingredients to the machine, can be attached to the container at any position as it may simply extend radially from the sphere. A further advantage is that access openings and their associated lids can be circular in shape.

The scraper may be rotatable. The axis of rotation of the scraper may extend transverse to the vertical, and that axis may be substantially horizontal.

The outlet may be located in the lower region of the container.

According to another aspect of the present invention, a method of mixing and kneading farinaceous material in a container includes passing a scraper over the majority of the inwardly facing surface of the container.

The scraper may pass over the lowermost portion of the inwardly facing surface and over the complete extent of the inwardly facing surface of the container leading to the lowermost portion of that surface. The scraper passes over a portion of the inwardly facing surface which also faces downwardly.

The method may include causing rotation of a rotor within the container with the scraper passing over the inwardly facing surface of the container adjacent to the region where the rotor projects from the wall of the container. The scraper may pass over the inwardly facing surface of the container around the region where the rotor projects from the wall of the container. The rotor may rotate about an axis transverse to the vertical which axis may be substantially horizontal.

The method may include rotating the scraper. The scraper may be rotated about an axis transverse to the vertical which axis may be substantially horizontal.

The scraper may be moved over the inlet to the container during mixing.

The mixture may be discharged from the container, after it has been mixed and kneaded, through an outlet located in the lower region of the container, and the outlet may extend over the complete lowermost region of the container. The scraper may be located in the region of or to one side of the outlet opening during at least part of the discharge of material through that opening. The farinaceous material may co-operate with the scraper during discharge of that material through the outlet opening to assist in that discharge. The rotor may rotate during at least part of the discharge of material through the outlet opening. That rotation of the rotor may assist in the movement of the material through the outlet opening during at least part of the period when material is being discharged. Rotation of the rotor during at least part of the discharge may cause movement of some farinaceous material towards the scraper and at least some of that farinaceous material may be deflected downwardly by co-operation with a downwardly facing surface on the scraper.

The scraper is pivoted during at least part of the discharge of material through an outlet opening.

The rotor may be rotated in one direction during at least part of the mixing and kneading of the farinaceous material and in a reverse direction during at least part of the discharge of the farinaceous material.

According to another aspect of the present invention, a method of discharging mixed and kneaded farinaceous material comprises locating a movable scraper in the region of an outlet opening in a container during at least part of the discharge of the material from the container.

The present invention also includes a machine including any combination of the herein described features, and a method of kneading and mixing farinaceous material and a method of discharging mixed and kneaded farinaceous material using a machine as herein described.

The invention may be carried into practice in various ways, but two embodiments will now be described by way of example and with reference to the accompanying drawings, in which:

Figure 1 is a cross sectional view of a machine for mixing and kneading dough according to a first embodiment of the present invention.

Figure 2 is a cross-sectional view taken along the line II-II of Figure 1, and

Figure 3 is a view corresponding to that shown in Figure 2 of an alternative embodiment of the present invention.

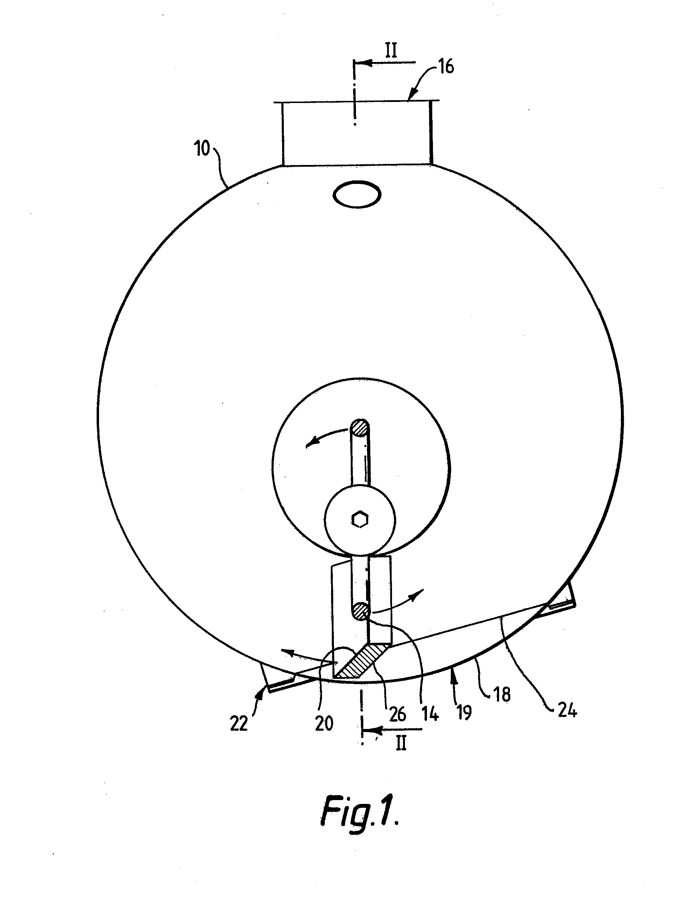

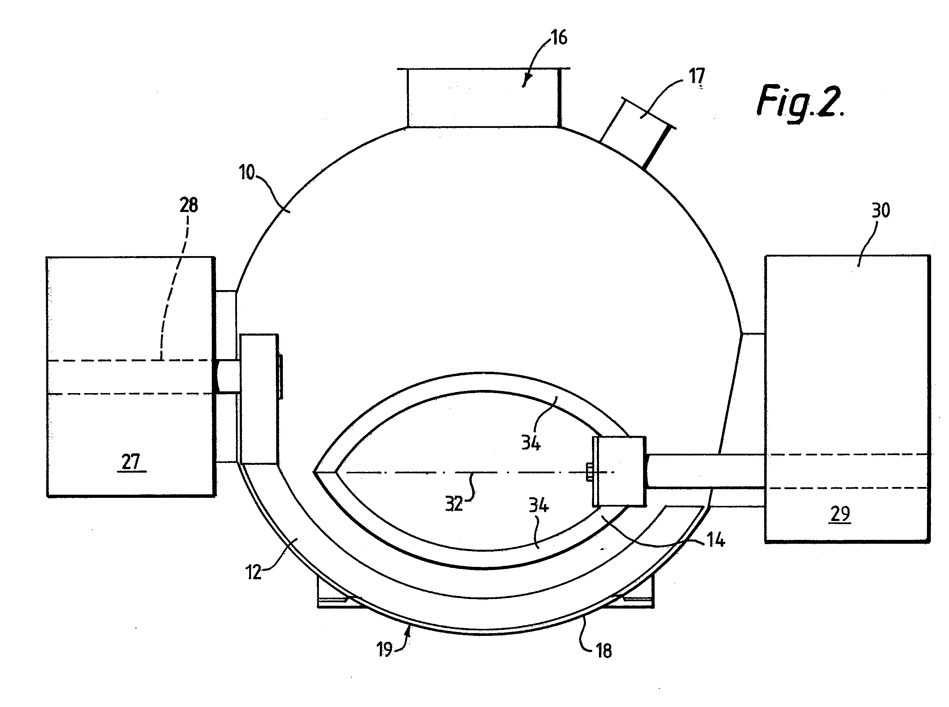

As shown in Figures 1 and 2, the machine comprises a spherical container 10 with an outer slow beater or scraper 12 and an inner fast beater 14 comprising two arcuate arms which are circular in cross-section. Inlets 16 and 17 are included at the top of the spherical container for flour and water respectively and a lid 18 closes an outlet 19 at the bottom of the container.

In use the material to be mixed and kneaded is inserted through the inlets 16 and 17. The inlets can then be closed and sealed to allow the pressure within the container to be increased or decreased, if desired. The scraper 12 then rotates in a clockwise direction and the high speed beater 14 rotates in the opposite direction. The scraper 12 and beater 14 co-operate with the dough to exert a shear force on the material to assist in the mixing and kneading.

As shown in Figure 1, the scraper 12 includes an angled blade having a forward surface 20, inclined with respect to the adjacent surface of the container which passes over nearly the complete inner surface of the container during its rotation at a distance of approximately 3 mm. The scraper may pass over 80 or 90% or more of the surface of the container. The surface 20 lifts the dough from substantially the complete inwardly facing surface of the container and assists in rotating a ball of dough within the container. Furthermore, as the container is spherical there are no corners into which dough can be pushed or remain undisturbed and unmixed.

When the dough has been mixed and kneaded sufficiently, the lid 18 at the bottom of the container is opened about a hinge 22 and the dough tends to fall out of the opening 24. It can be seen that the opening 24 extends across, and thus completely surrounds the place which is lowermost during mixing and kneading, and that the inner walls of the container all lead to the opening thus enhancing the discharge of the dough. During initial discharge the scraper 12 is rotated in a clockwise direction approximately 2 to 4 seconds after the lid has been opened to scrape the dough off the inner surface of the container. The scraper 12 is then located adjacent to the left hand side of the opening 24 and the rotor 14 then either commences or continues rotating in a clockwise direction (which is opposite to that direction in which it rotates during mixing) to cause the dough to move downwardly and slightly to the right of centre, towards and out through the opening. The opening 24 is offset to the right to ensure adequate discharge of the dough. A portion of the dough which is caused to move by the rotor 14 will be deflected downwardly by an angled surface 26 of the scraper through the outlet. Periodically, during discharge the scraper is rotated in either a clockwise or anti-clockwise direction through one revolution in order to ensure that no dough remains on the inwardly facing surface of the container.

As shown in Figure 2, the rotor 12 is driven by a motor/gearbox arrangement 27 coupled to a lay shaft 28 mounted on the outside of the container and the axis of rotation of the scraper 12 is coincident with a horizontal radius from the spherical container. The high speed beater 14 is driven by a motor/gearbox arrangement 29 coupled to a lay shaft 30 mounted on the opposite side of the container to that of the lay shaft 28, and the horizontal axis of rotation 32 of the beater 14 lies beneath the centre of the spherical container whereby arcuate arms 34 of the beater 14 are able to rotate wholly within the lower half of the spherical container.

In a modified arrangement (not shown) the axes of rotation of the scraper 12 and beater 14 are coincident, coming in from opposite sides of the container on horizontal radii from the spherical container. That modified arrangement allows the scraper to pass over even more of the inner surface of the container.

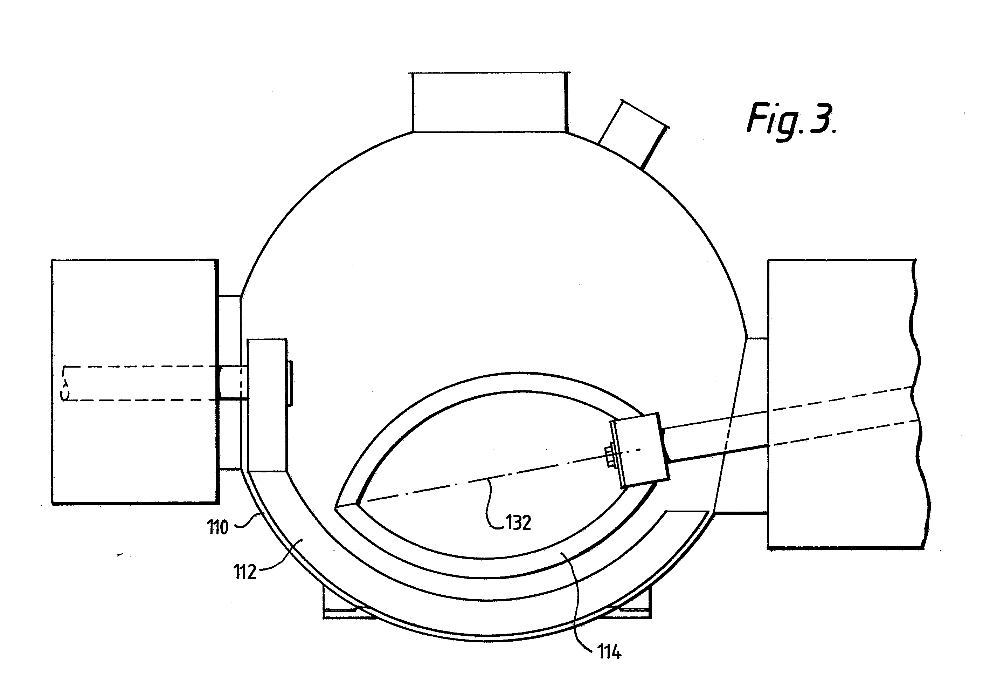

In the embodiment shown in Figure 3, the axis of rotation 132 of the high speed beater 114 is inclined downwardly as it extends into the container 110. However, the construction and operation of the remainder of the machine, including the scraper 112 is as previously described in relation to Figures 1 and 2.

Although the ingredients have been described as coming in from the inlets 16 and 17, it will be appreciated that feed pipes or any other connections or monitors or probes may be secured to any convenient point on the container as they are able to extend radially outwardly from the spherical container.

The low speed beater or scraper 12 has been described as comprising a single blade. In an alternative embodiment two diametrically opposed blades are provided. Alternatively or additionally the blade may extend across the container at an angle to the rotational axis of the scraper 12 thus moving the dough in the direction of that rotational axis upon rotation of the scraper. With that arrangement of scraper 12, the high speed beater 14 may be arranged to move the dough in an opposite direction along the rotational axis to further increase the shear or kneading and mixing action on the dough.

If desired, either or both of the beaters may include a scroll formation along their lengths to assist in the action on the dough.

## Claims

1. A mixing and kneading machine for farinaceous material including a container (10,110) for the material to be mixed and a scraper (12,112) characterised in that the scraper is arranged to pass over the majority of the inwardly facing surface of the container.

2. A machine as claimed in Claim 1 in which the scraper (12,112) is arranged to pass over the lowermost portion of the inwardly facing surface of the container and over the complete extent of the inwardly facing surface of the container leading to the lowermost portion of that surface.

3. A machine as claimed in Claim 1 or 2 in which the scraper (12,112) is arranged to pass over the inwardly facing surface of the container over a portion of the surface which faces downwardly.

4. A machine as claimed in any preceding including a rotor (14,114) extending within the container (10,110), the scraper being arranged to pass over the inwardly facing surface of the container adjacent to the region where the rotor projects from the wall of the container.

5. A machine as claimed in Claim 4 in which the rotor is arranged to rotate about an axis (32,132) transverse to the vertical.

6. A machine as claimed in any preceding claim in which the axis of rotation of the scraper extends transverse to the vertical.

7. A machine as claimed in any preceding claim in which an outlet (19) is located in the lower region of the container.

8. A machine as claimed in Claim 7 in which the outlet (19) extends over the complete lowermost region of the container.

9. A machine as claimed in any preceding claim in which the scraper (12,112) is arranged to pass over the outlet.

10. A machine as claimed in any preceding claim in which a cross-section taken in any direction through the lower portion of the container will give a line on the interior of the container having a change in angle of less than 90° at any two adjacent locations on that line.

11. A machine as claimed in Claim 10 in which the inwardly facing surface of the container is substantially spherical.

12. A method of mixing and kneading farinaceous material in a container (10,110) characterised in that a scraper (12,112) is passed over the majority of the inwardly facing surface of the container.

13. A method as claimed in Claim 12 in which the scraper is passed over the lowermost portion of the inwardly facing surface and over the complete extent of the inwardly facing surface of the container leading to the lowermost portion of that surface.

14. A method as claimed in Claim 12 or 13 including causing rotation of a rotor within the container with the scraper passing over the inwardly facing surface of the container adjacent to the region where the rotor projects from the wall of the container.

15. A method as claimed in any of Claims 12 to 14 including rotating the scraper (12,112) about an axis transverse to the vertical.

16. A method as claimed in any of Claims 12 to 15 in which the scraper (12,112) is moved over the inlet (16,17) to the container during mixing.

17. A method as claimed in any of Claims 12 to 16 in which the mixture is discharged from the container, after it has been mixed and kneaded, through an outlet (19) located in the lower region of the container.

18. A method as claimed in any of Claims 12 to 17 in which the scraper (12,112) is located in the region of the outlet opening (19) during at least part of the discharge of material through that opening.

19. A method as claimed in Claim 18 in which farinaceous material co-operates with the scraper (12,112) during discharge of that material through the outlet opening (19) to assist in that discharge.

20. A method as claimed in any of Claims 12 to 19 in which the scraper is moved during at least part of the discharge of material through an outlet opening.

21. A method as claimed in any of Claims 12 to 20 when using a machine as claimed in any of Claims 1 to 11.

0280477

Fig.1.

Fig.2.

0280477

Fig. 3.

132

114

112

110

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 278 268  (A.STEPHAN U.SOHNE) * Page 4, lines 2-9; page 5, line 20 - page 6, line 4; figures 1,2 * | 1-3,6-9 ,12,13, 15-21 | A 21 C    1/06 |
| X | GB-A-  172 513  (W.W.VEITCH et al.) * The whole document * | 1-19 | |
| A | GB-A-  158 402  (J.W.OWEN) | | |
| A | FR-A-  696 877  (F.AESCHBACH S.A.) | | |

TECHNICAL FIELDS SEARCHED (Int. Cl.4)

A 21 C

The present search report has been drawn up for all claims

| Place of search | Date of completion of the search | Examiner |
|---|---|---|
| THE HAGUE | 03-05-1988 | FRANKS N.M. |

EPO FORM 1503 03.82 (P0401)